# EUROPÄISCHE PATENTSCHRIFT

(11) **EP 2 318 731 B1**
(45) Veröffentlichungstag und Bekanntmachung des Hinweises auf die Patenterteilung: **14.10.2015**
(21) Anmeldenummer: 09740835.5
(22) Anmeldetag: 03.08.2009
(51) Int. Cl.: F16F 15/131

(54) **ZWEIMASSENSCHWUNGRAD**
DUAL-MASS FLYWHEEL
VOLANT MOTEUR BI-MASSE

(30) Priorität: 01.09.2008 DE 102008045259; 21.10.2008 DE 102008052450
(43) Veröffentlichungstag der Anmeldung: 11.05.2011
(73) Patentinhaber: Schaeffler Technologies AG & Co. KG, 91074 Herzogenaurach (DE)
(72) Erfinder: PANTHER, Urban, 77960 Seelbach (DE); SCHWEDERLE, Philippe, 67000 Strasbourg (FR); JANZ, Thomas, 77815 Bühl (DE)
(86) Internationale Anmeldenummer: PCT/DE2009/001086
(87) Internationale Veröffentlichungsnummer: WO 2010/022697

(56) Entgegenhaltungen:
- DE-A1- 10 031 443
- DE-A1-102007 003 047
- DE-T5- 10 297 771
- JP-A- H09 280 317

## Beschreibung

Die vorliegende Erfindung betrifft ein Zweimassenschwungrad, insbesondere zur Verwendung im Antriebsstrang eines Kraftfahrzeugs, mit einer Primärschwungscheibe und einer Sekundärschwungscheibe, die gegen die Kraft mindestens einer Bogenfeder relativ zueinander verdrehbar sind.

Zweimassenschwungräder sind hinreichend aus dem Stand der Technik bekannt. Hierzu wird stellvertretend auf die Patentschriften DE 10 2007 003 047 A1 und DE 10 2007 051 068 A1 der Anmelderin, sowie auf die DE 100 31 443 A1 verwiesen, die eine drehzahl- bzw. fliehkraftabhängige Rückstellkraft offenbart, wobei eine höhere Zentrifugalkraft in Folge einer gesteigerten Drehzahl einen höheren Verdrehwiderstand bewirkt.

Ein Zweimassenschwungrad gemäß Stand der Technik umfasst eine Primärschwungscheibe, die antriebsseitig insbesondere mit der Kurbelwelle des Verbrennungsmotors (im Folgenden nur Motor) verbunden wird, und eine hierzu konzentrisch angeordnete Sekundärschwungscheibe, über welche abtriebsseitig die Anbindung des Getriebes (ggf. über eine Kupplung) an das Zweimassenschwungrad erfolgt. Eine Hauptfunktion des Zweimassenschwungrades als Schwingungsdämpfer ist eine bestmögliche schwingungstechnische Entkopplung zw. Isolation von Motor und Getriebe. Hierfür umfasst das Zweimassenschwungrad ein integriertes Feder-Dämpfungssystem, meist bestehend aus sogenannten Bogenfedern, das zwischen der Primärschwungscheibe und der Sekundärschwungscheibe wirksam ist. Die Sekundärschwungscheibe ist zur Primärschwungscheibe um einen definierten Winkelbetrag relativ verdrehbar gelagert, wobei ein Verdrehen entgegen einer Federkraft des Feder-Dämpfungssystem erfolgt. Ein Flansch dient zur Übertragung des Drehmomentes von der Primärschwungscheibe über das Feder-Dämpfungssystem zur Sekundärschwungscheibe. Der Flansch ist in der Regel fest mit der Sekundärschwungscheibe verbunden und greift mit seinen sogenannten Flanschflügeln an den Federenden des Feder-Dämpfungssystems an.

Um die immer höher werdenden Motordrehmomente bei gleichem Bauraum abzudecken, werden die Kennlinien der Bogenfedern des Feder-Dämpfungssystems zwangsläufig steiler ausgelegt, um eine steilere Dämpfungskennlinie zu erhalten. Dies führt aber zu einer Verschlechterung der Schwingungsdämpfung bzw. Schwingungsisolation. Weiterhin nachteilig ist, dass die Federkennlinien in der Regel linear verlaufen, was jedoch anwendungsbedingt nicht immer wünschenswert ist. Zudem ist konstruktiv der relative Verdrehwinkel zwischen Sekundärschwungscheibe und Primärschwungscheibe begrenzt und liegt in der Regel bei maximal 180° (in beiden Drehrichtungen), was anwendungsbedingt häufig nicht ausreichend ist.

Eine Aufgabe der Erfindung ist es daher, eine Konstruktion für ein Zweimassenschwungrad der eingangs genannten Art zu finden, die eine freiere Gestaltung der Federkennlinien zulässt und den möglichen Verdrehwinkel erhöht.

Diese Aufgabe wird durch ein Zweimassenschwungrad gemäß den Merkmalen des Anspruches 1 gelöst. Vorteilhafte und bevorzugte Weiterbildungen sind Gegenstand der hiervon abhängigen Ansprüche.

Erfindungsgemäß wird ein Zweimassenschwungrad vorgeschlagen, insbesondere zur Verwendung im Antriebsstrang eines Kraftfahrzeugs, mit einer Primärschwungscheibe und einer Sekundärschwungscheibe, die gegen die Kraft mindestens einer Bogenfeder relativ zueinander verdrehbar sind, wobei eine Drehmomentübertragung von der Primärschwungscheibe auf die Sekundärschwungscheibe über wenigstens einen Kipphebel erfolgt, der an der Primärschwungscheibe oder der Sekundärschwungscheibe angeordnet ist, wobei der Kipphebel sich mit einem Lastarm auf einer Kurvenscheibe abstützt, die an der jeweils anderen Schwungscheibe angeordnet ist, und mit einem Kraftarm in Wirkverbindung mit einem Federende der Bogenfeder ist, wobei sich das andere Federende der Bogenfeder an der Schwungscheibe abstützt, an der der Kipphebel angeordnet ist. Der Kipphebel ist dabei an einer der beiden Schwungscheiben angelagert bzw. befestigt, womit sowohl eine direkte als auch eine indirekte Befestigung (mittels weiterer Bauteile / Komponenten) gemeint ist (relevant ist die kraftflussmäßige Zuordnung). Der Kipphebel zusammen mit der Kurvenscheibe ist Teil eines zwischen Primärschwungscheibe und Sekundärschwungscheibe angeordneten Feder-Dämpfungssystems. Bevorzugt sind der Kipphebel an der Primärschwungscheibe und die Kurvenscheibe an der Sekundärschwungscheibe angeordnet. Der Kipphebel stützt sich mit dem Ende eines Lastarms auf einer Kurvenscheibe ab.

Die erfindungsgemäße Lösung weist gegenüber dem Stand der Technik im Wesentlichen die folgenden Vorteile auf:
- Die Dämpfungskennlinie des Zweimassenschwungrades kann sowohl über die verbauten Federn des Feder-Dämpfungssystems als auch über die Kontur der Kurvenscheibe und die Geometrie der Kipphebel eingestellt werden. Damit ergibt sich ein wesentlich größerer Gestaltungsraum mit mehr Freiheitsgraden für die Auslegung der Dämpfungseigenschaften des Zweimassenschwungrades, da diese erfindungsgemäß nicht ausschließlich von den Federkennlinien der verbauten Federn abhängen. Im Ergebnis sind damit auch nicht lineare oder geknickte Verläufe, sowie asymmetrische Verläufe möglich.
- Die Zugseite und die Druckseite der Dämpfungskennlinie kann asymmetrisch ausgelegt werden, bspw. durch eine asymmetrisch geformte Kurvenscheibe.
- Die Federn des Feder-Dämpfungssystems können sehr steif ausgelegt werden, da ein Ausgleich durch die Kurvenscheibe möglich ist. Fernerhin können die Federn auch mit Vorspannung bzw. Vorlast verbaut werden. Dadurch kann der Federweg (auch als Federhub bzw. Spannungshub bezeichnet) reduziert werden. Die Federn können somit aus einem verhältnismäßig dicken Draht mit einer nur geringen Steigung bzw. Windungsanzahl gewickelt werden, was zu kurzen Federn führt, die zudem weniger Bauraum im Zweimassenschwungrad erfordern. Selbiges gilt für vorgespannte Federn.
- Ein spezieller Überlastungsschutz (Impactschutz) ist nicht erforderlich, da bei einer Überlastung (Impact) der Kipphebel bzw. die Kipphebel die Kurvenscheibe überrollen kann bzw. können.

Gemäß einer bevorzugten Weiterbildung umfasst das erfindungsgemäße Zweimassenschwungrad einen Zahnkranzring auf den das Drehmoment des Motors von der Primärschwungscheibe übertragen wird. Der Zahnkranzring ist bevorzugt einteilig ausgebildet und verdrehbar zur Primärschwungscheibe gelagert.

Bevorzugt ist zudem vorgesehen, dass der Zahnkranzring auf seiner Innenumfangsfläche zumindest abschnittsweise eine Verzahnung aufweist.

Vorzugsweise sind im Kraftfluss zwischen der Primärschwungscheibe und dem Zahnkranzring Bogen- und/oder Druckfedern angeordnet.

Gemäß einer bevorzugten Weiterbildung ist vorgesehen, dass der Kipphebel einen Kraftarm aufweist, der an seinem Ende mit einer Stirnverzahnung ausgebildet ist, wobei die Stirnverzahnung in die Verzahnung auf der Innenumfangsfläche des Zahnkranzringes eingreift.

Erfindungsgemäß weist der Kipphebel des Weiteren einen Flieharm auf, der als Massenausgleich für den Kipphebel und insbesondere als Massenausgleich für den Last- und/oder Kraftarm dient. Eine gezielte Drehzahlabhängigkeit kann so konstruktiv durch die Geometrie und Masse des Flieharms eingestellt werden.

Bevorzugt ist der Kipphebel schwenkbar an der Primärschwungscheibe angeordnet, wobei sich eine Schwenklagerung durch einen zentralen Bereich des Kipphebels erstreckt. Der zentrale Bereich des Kipphebels ist insbesondere dadurch gebildet, dass hier die einzelnen Arme des Kipphebels zusammentreffen. Eine Schwenklagerung des Kipphebels erfolgt bevorzugt mittels eines Wälzlagers, wie insbesondere einem Nadellager, Rollenlager, Kugellager oder Gleitlager.

Eine vorteilhafte Weiterbildung der Erfindung sieht vor, dass sich der Kipphebel am Ende seines Lastarms mittels wenigstens einer Laufrolle auf der Kurvenscheibe abstützt. Damit ist eine leichtgängige Relativbewegung des Lastarmes zur Kurvenscheibe ermöglicht.

Weiterhin ist bevorzugt vorgesehen, dass die Kurvenscheibe integral mit der Sekundärschwungscheibe ausgebildet ist. Hierdurch kann eine Kraftübertragung bzw. Drehmomentübertragung von der Kurvenscheibe auf die Primärschwungscheibe optimiert werden.

Besonders bevorzugt ist vorgesehen, dass an dem erfindungsgemäßen Zweimassenschwungrad drei Kipphebel in gleichen Winkelabständen schwenkbar an der Primärschwungscheibe angeordnet sind. Die drei Kipphebel sind bevorzugt identisch ausgebildet.

Vorzugsweise ist weiter vorgesehen, dass die Kurvenscheibe im Wesentlichen eine dreieckige Kontur bzw. Form mit verrundeten Ecken aufweist, wobei die geraden Abschnitte zwischen den verrundeten Ecken mit einer leichten Konkavität ausgebildet sind. Die dreieckige Kontur bezieht sich auf eine Draufsicht. Insbesondere ist eine gleichseitige bzw. symmetrische dreieckige Kontur für die Kurvenscheibe vorgesehen. Daneben ist aber auch eine asymmetrische dreieckige Kontur bevorzugt.

Insbesondere ist im Allgemeinen die Anzahl der geraden Abschnitte einer Kurvenscheibe mit der Anzahl der verbauten Kipphebel identisch, wobei jeweils ein verrundeter Übergang zwischen zwei benachbarten geraden Abschnitten vorgesehen sein soll.

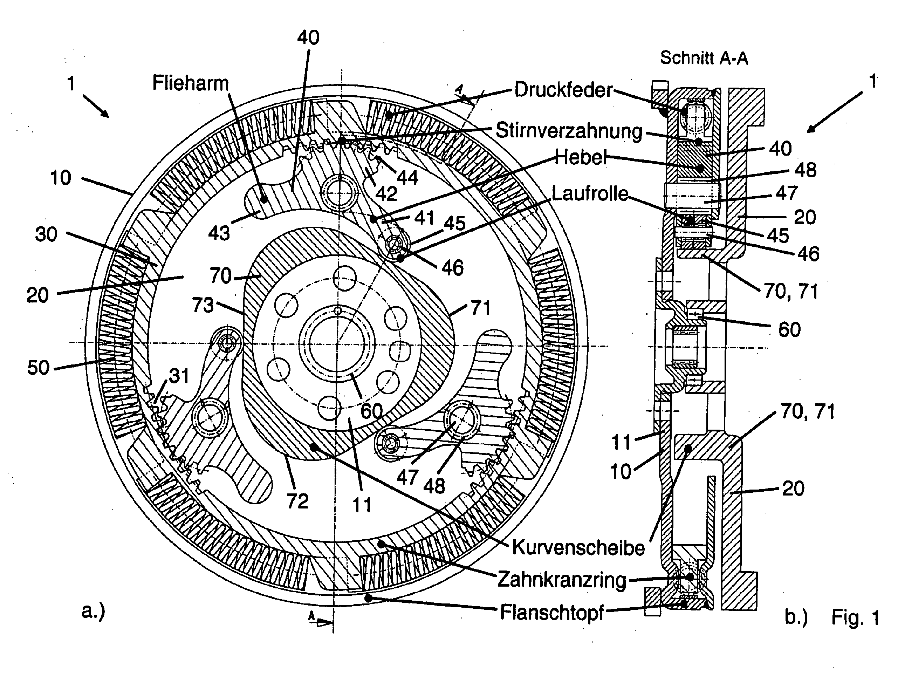

Im Folgenden wird ein Ausführungsbeispiel der Erfindung anhand der einzigen Fig. 1 erläutert. Diese zeigt in einer Teilfigur a (linke Seite) ein Zweimassenschwungrad in einer aufgeschnitten Vorderansicht und in einer Teilfigur b (rechte Seite) dasselbe Zweimassenschwungrad in einer aufgeschnittenen Seitenansicht gemäß dem in der Teilfigur a angegebenen Schnittverlauf A-A. Sämtliche Merkmale, die im Zusammenhang mit dem Ausführungsbeispiel gezeigt und/oder erörtert sind, sind unabhängig von den anderen Merkmalen dieses Ausführungsbeispieles, zugleich allgemeine Merkmale der Erfindung.

Das Zweimassenschwungrad 1 gemäß dem Ausführungsbeispiel umfasst eine Primärschwungscheibe 10, die antriebsseitig über den Flansch 11 insbesondere mit der Kurbelwelle eines Motors verbunden werden kann, und eine hierzu konzentrisch angeordnete Sekundärschwungscheibe 20, welche abtriebsseitig mit einem Getriebe oder einer Kupplung verbunden werden kann. Über die Verbindungen zum Motor und zum Getriebe bzw. zur Kupplung können Kräfte und insbesondere Drehmomente übertragen, d.h. in das Zweimassenschwungrad 1 eingeleitet und ausgeleitet werden. Die Primärschwungscheibe 10 und die Sekundärschwungscheibe 20 sind über eine zentrale Drehlagerung bzw. ein zentrales Lager 60 miteinander verbunden, das hier als Rollenwälzlager ausgebildet ist. Das zentrale Lager 60 gestattet nicht nur eine relative Verdrehung der beiden Schwungscheiben, sondern in der Regel auch eine leichte Kippbewegung der Schwungscheiben zueinander. Die rotatorische Entkopplung der beiden Schwungscheiben 10 und 20 aufgrund des zentralen Lagers 60 ergibt sich sehr gut aus der Darstellung der rechten Teilfigur b.

Das Zweimassenschwungrad 1 umfasst weiterhin einen Zahnkranzring 30. Der Zahnkranzring 30 ist relativ verdrehbar zur Primärschwungscheibe 10 gelagert. Der Zahnkranzring 30 ist über sechs Spiral-Bogenfedern 50 rotatorisch mit der Primärschwungscheibe 10 verbunden und wird sozusagen von dieser angetrieben. Die Bogenfedern 50 sind zwischen korrespondierenden Anschlägen in der Primärschwungscheibe 10 und dem Zahnkranzring 30 eingesetzt. Ein Federende der Bogenfedern 50 stützt sich dazu an dem Zahnkranzring 30 ab, das jeweils andere Federende stützt sich an der Primärschwungscheibe 10 ab. Über die Bogenfedern 50 kann ein Drehmoment von der Primärschwungscheibe 10 auf den Zahnkranzring 30 übertragen werden, wobei die Bogenfedern 50 auf Druck beansprucht werden. Ein plötzlich auftretender Lastwechsel des Motor-Drehmoments, bspw. bei Stößen oder periodischen Schwingungen, kann von den Bogenfedern 50 abgefangen werden, was im Ergebnis zu einer schwingungstechnischen Entkopplung zwischen der Primärschwungscheibe 10 und dem Zahnkranzring 30 führt. Die Bogenfedern 50 bilden somit ein Feder-Dämpfungssystem. Dieses Feder-Dämpfungssystem ist jedoch nicht unmittelbar zwischen Primärschwungscheibe 10 und Sekundärschwungscheibe 20 wirksam, wie im Stand der Technik üblich, sondern nur noch mittelbar, wie nachfolgend erläutert.

Die weitere Kraft- bzw. Drehmomentübertragung von dem Zahnkranzring 30 auf die Sekundärschwungscheibe 20 erfolgt über drei Kipphebel 40, die jeweils mit einem Kraftarm 42 am Zahnkranzring 30 und mit einem Lastarm 41 an einer Kurvenscheibe 70, die hier integral mit der Sekundärschwungscheibe 20 ausgebildet ist, eingreifen bzw. angreifen.

Ein Kipphebel 40 ist einstückig ausgebildet und weist jeweils einen Lastarm 41, einen Kraftarm 42 und einen Flieharm 43 auf. Die einzelnen Arme 41, 42 und 43 erstrecken sich sternförmig von einem zentralen Bereich des Kipphebels 40. Der Kipphebel 40 ist mittels eines Schwenklagers 47 an der Primärschwungscheibe angelagert bzw. schwenkbar befestigt. Hierzu erstreckt sich ein Bolzen bzw. Zapfen durch eine Bohrung im zentralen Bereich des Kipphebels 40, wobei fernerhin ein Wälzlager 48 vorgesehen ist. Ein Wälzlager kann insbesondere ein Nadellager, Rollenlager, Kugellager oder Gleitlager sein.

Der Kraftarm 42 ist an seinem vom zentralen Bereich des Kipphebels 40 entfernten Ende mit einer Stirnverzahnung 44 ausgebildet. Diese Stirnverzahnung 44 greift formschlüssig in eine Verzahnung 31 am Innenumfang des Zahnkranzringes 30 ein. Über diesen Formschluss können Kräfte und insbesondere Drehmomente von dem Zahnkranzring 30 auf den Kipphebel 40 übertragen werden.

Mit seinem Lastarm 41 stützt sich der Kipphebel 40 auf der Kurvenscheibe 70 ab, wobei die Kurvenscheibe 70 integral d.h. einstückig mit der Sekundärschwungscheibe 20 ausgebildet ist. Hierzu ist an dem freien, vom zentralen Bereich des Kipphebels 40 abgewandten Ende des Lastarmes 41 eine Laufrolle 45 angeordnet, wobei ein Bolzen bzw. Zapfen und ein Wälzlager 46 für die drehbare Befestigung der Laufrolle 45 vorgesehen sind. Genau genommen stützt sich die Laufrolle 45 auf eine Oberfläche bzw. Gleitfläche 71 der Kurvenscheibe ab und kann sich zu dieser Oberfläche 71 relativ bewegen.

Der Flieharm 43 eines Kipphebels 40 dient zum Massenausgleich, so dass der mit der Primärschwungscheibe 40 mitdrehende bzw. mitrotierende Kipphebel 40 über die auf ihn einwirkenden Fliehkräfte keinem zusätzlichen Drehmoment bzw. Kippmoment ausgesetzt ist, was anderenfalls die Übertragungskennlinie des Zweimassenschwungrades 1 drehzahlabhängig beeinflussen würde.

Die Kurvenscheibe 70 weist in der Draufsicht gemäß der Teilfigur a im Wesentlichen die Form eines gleichseitigen Dreiecks mit verrundeten Ecken 72 auf. Die geraden Abschnitte 73 zwischen den verrundeten Ecken 72 sind mit einer leichten Konkavität ausgebildet. Im Normalbetrieb des Zweimassenschwungrades 1 befindet sich die Laufrolle 45 des Kipphebels 40 im Bereich eines solchen geraden Abschnitts 73. Hierbei kann eine Kraft bzw. ein Drehmoment vom Kipphebel 40 auf die Kurvenscheibe 70 und damit auf das Sekundärschwungrad 20 übertragen werden.

In der Gesamtheit ergibt sich damit folgender Kraftfluss- bzw. Drehmomentfluss von der Primärschwungscheibe 10 auf die Sekundärschwungscheibe 20. Der Motor treibt die Primärschwungscheibe an, wozu er ein Drehmoment auf diese ausübt bzw. überträgt. Durch die sechs Bogenfedern 50 erfolgt eine gedämpfte Übertragung dieses Drehmomentes auf den Zahnkranzring 30. Der Zahnkranzring 30 leitet dieses Drehmoment in die drei Kipphebel 40 ein, wozu die Kraftarme 42 der Kipphebel 40 mit ihrer Stirnverzahnung 44 formschlüssig in die Verzahnung 31 auf der Innenumfangsfläche des Zahnkranzringes 30 eingreifen. Die drei Kipphebel 40 drehen im Übrigen mit der Primärschwungscheibe 10 mit. Von den Kipphebeln 40 wird das Drehmoment über die Lastarme 41 und die Laufrollen 45 auf die Kurvenscheibe 70 übergeleitet. Die Kipphebel 40 sind also jeweils mit ihrem Kraftarm 42 über den Zahnkranzring 30 in Wirkverbindung mit einem Federende der Bogenfeder 50. Die drei Laufrollen sind derart am Umfang der Oberfläche 71 der Kurvenscheibe 70 positioniert, dass diese bei ihrer der Primärschwungscheibe 10 folgenden Drehbewegung die Kurvenscheibe 70 quasi mitnehmen. Dieser Effekt wird durch die leichte Konkavität der geraden Abschnitte 73 der Schwungscheibe 70 noch verstärkt. Die Kurvenscheibe 70 ist integral mit de Sekundärschwungscheibe 20 ausgebildet, so dass das um Schwingungen und Stöße reduzierte Drehmoment der Kurvenscheibe 70 an der Sekundärschwungscheibe 20 abgreifbar ist und an das Getriebe bzw. an die Kupplung weitergegeben werden kann.

Eine relative Verdrehung zwischen Primärschwungscheibe 10 und Zahnkranzring 30 bewirkt, durch den Formschluss zwischen Stirnverzahnung 44 am Kraftarm 42 des Kipphebels 40 und der Verzahnung 31 an der Innenumfangsfläche des Zahnkranzringes 30, eine Veränderung der Winkellage der Kipphebel 40. Damit verändert sich auch die Position der Laufrollen 45 an den Lastarmen 41 der Kipphebel 40 relativ zur Oberfläche 71 der Kurvenscheibe 70. Dies hat zur Folge, dass sich das Kraftübertragungsverhältnis bedingt durch die wirksame Länge der Lastarme 41 und der Kraftarme 42 der Kipphebel 40 verändert, was im Gesamten die Übertragungscharakteristik und insbesondere auch die Dämpfungscharakteristik beeinflusst. Auch die Form der Kurvenscheibe hat Einfluss auf die Übertragungscharakteristik und insbesondere auf die Dämpfungscharakteristik.

Im Ergebnis wird damit die Übertragungskennlinie und insbesondere die Feder-Dämpfungskennlinie des Zweimassenschwungrades 1 sowohl durch die Federkennlinien der Bogenfedern 50 als auch durch die Übertragungskennlinie der Kipphebel 40 und der Schwungscheibe 70 bestimmt. Es bestehen somit wesentlich mehr Gestaltungsfreiheiten und Auslegungsmöglichkeiten als dies bisher im Stand der Technik möglich ist. So sind insbesondere auch nicht-lineare Übertragungskennlinien und abgesetzte bzw. geknickte Kennlinien für verschiedene Lastbereiche umsetzbar. Zudem sind größere Verdrehwinkel zwischen der Primärschwungscheibe 10 und der Sekundärschwungscheibe 20 realisierbar, als dies bisher im Stand der Technik möglich ist.

Das erfindungsgemäße Zweimassenschwungrad umfasst weiterhin einen Überlastschutz (Impactschutz). Steigt das zu übertragende Drehmoment, auch kurzfristig, über einen konstruktiv ausgelegten Maximalwert an, so führt dies dazu, dass die Laufrollen 45 an den Lastarmen 41 der Kipphebel 40 die verrundeten Ecken 72 der Kurvenscheibe 70 überrollen, was in diesem Fall durch eine extreme Veränderung der Winkellage der Kipphebel 40 ermöglicht wird.

## Patentansprüche

1. Zweimassenschwungrad (1), insbesondere zur Verwendung im Antriebsstrang eines Kraftfahrzeugs, mit einer Primärschwungscheibe (10) und einer Sekundärschwungscheibe (20), die gegen die Kraft mindestens einer Bogenfeder (50) relativ zueinander verdrehbar sind, wobei eine Drehmomentübertragung von der Primärschwungscheibe (10) auf die Sekundärschwungscheibe (20) über wenigstens einen Kipphebel (40) erfolgt, der an der Primärschwungscheibe (10) oder der Sekundärschwungscheibe (20) angeordnet ist, wobei der Kipphebel (40) sich mit einem Lastarm (41) auf einer Kurvenscheibe (70) abstützt, die an der jeweils anderen Schwungscheibe (20, 10) angeordnet ist, und mit einem Kraftarm (42) in Wirkverbindung mit einem Federende der Bogenfeder (50) ist, wobei sich das andere Federende der Bogenfeder (50) an der Schwungscheibe (10, 20) abstützt, an der der Kipphebel (40) angeordnet ist, wobei der Kipphebel (40) weiterhin einen Flieharm (43) aufweist, der als Massenausgleich für den Kipphebel und insbesondere als Massenausgleich für den Last- und/oder Kraftarm dient, so dass der Kipphebel (40) über die auf ihn einwirkenden Fliehkräfte keinem zusätzlichen Drehmoment bzw. Kippmoment ausgesetzt ist.

2. Zweimassenschwungrad (1) nach Anspruch 1, **dadurch gekennzeichnet, dass** der Kipphebel (40) an der Primärschwungscheibe (10) angeordnet ist und die Kurvenscheibe (40) an der Sekundärschwungscheibe (20) angeordnet ist.

3. Zweimassenschwungrad (1) nach Anspruch 1 oder 2, **dadurch gekennzeichnet, dass** ein Zahnkranzring (30) drehbar an der Primärschwungscheibe (10) angeordnet ist.

4. Zweimassenschwungrad (1) nach Anspruch 2 oder 3, **dadurch gekennzeichnet, dass** der Zahnkranzring (30) auf seiner Innenumfangsfläche zumindest abschnittsweise eine Verzahnung (31) aufweist.

5. Zweimassenschwungrad (1) nach einem der Ansprüche 3 oder 4, **dadurch gekennzeichnet, dass** im Kraftfluss zwischen der Primärschwungscheibe (10) und dem Zahnkranzring (20) mehrere Bogenfedern (50) angeordnet sind.

6. Zweimassenschwungrad (1) nach Anspruch 4 oder 5, **dadurch gekennzeichnet, dass** der Kraftarm (42) an seinem Ende mit einer Stirnverzahnung (44) ausgebildet ist, wobei die Stirnverzahnung (44) in die Verzahnung (31) auf der Innenumfangsfläche des Zahnkranzringes (30) eingreift.

7. Zweimassenschwungrad (1) nach einem der vorherigen Ansprüche, **dadurch gekennzeichnet, dass** der Kipphebel (40) schwenkbar an der Primärschwungscheibe (10) angeordnet ist, wobei sich eine Schwenklagerung (47) durch einen zentralen Bereich des Kipphebels erstreckt.

8. Zweimassenschwungrad (1) nach einem der vorherigen Ansprüche, **dadurch gekennzeichnet, dass** sich der Kipphebel (40) am Ende seines Lastarmes (41) mittels wenigstens einer Laufrolle (45) auf der Kurvenscheibe (70) abstützt.

9. Zweimassenschwungrad (1) nach einem der vorherigen Ansprüche, **dadurch gekennzeichnet, dass** die Kurvenscheibe (70) integral mit der Sekundärschwungscheibe (20) ausgebildet ist.

10. Zweimassenschwungrad (1) nach einem der vorherigen Ansprüche, **gekennzeichnet durch** drei, bevorzugt identische, Kipphebel (40), die in gleichen Winkelabständen schwenkbar an der Primärschwungscheibe angeordnet sind.

11. Zweimassenschwungrad (1) nach Anspruch 10, **dadurch gekennzeichnet, dass** die Kurvenscheibe (70) im Wesentlichen eine dreieckige Kontur mit verrundeten Ecken (72) aufweist, wobei die geraden Abschnitte (73) zwischen den verrundeten Ecken (72) mit einer leichten Konkavität ausgebildet sind.

## Claims

1. Dual-mass flywheel (1), in particular for use in the drivetrain of a motor vehicle, having a primary flywheel disk (10) and having a secondary flywheel disk (20) which are rotatable relative to one another counter to the force of at least one bow spring (50), wherein a transmission of torque from the primary flywheel disk (10) to the secondary flywheel disk (20) is realized by way of at least one rocker lever (40) which is arranged on the primary flywheel disk (10) or on the secondary flywheel disk (20), wherein the rocker lever (40) is supported by way of a load arm (41) on a cam disc (70) which is arranged on the respective other flywheel disk (20, 10), and said rocker lever is operatively connected by way of a force arm (42) to one spring end of the bow spring (50), wherein the other spring end of the bow spring (50) is supported on that flywheel disk (10, 20) on which the rocker lever (40) is arranged, wherein the rocker lever (40) furthermore has a centrifugal arm (43) which serves as a balance mass for the rocker lever and in particular as a balance mass for the load and/or force arm, such that the rocker lever (40) is not subjected to any additional torques or tilting moments by the centrifugal forces acting thereon.

2. Dual-mass flywheel (1) according to Claim 1, **characterized in that** the rocker lever (40) is arranged on the primary flywheel disk (10) and the cam disc (40) is arranged on the secondary flywheel disk (20).

3. Dual-mass flywheel (1) according to Claim 1 or 2, **characterized in that** a toothed ring (30) is arranged rotatably on the primary flywheel disk (10).

4. Dual-mass flywheel (1) according to Claim 2 or 3, **characterized in that** the toothed ring (30) has a toothing (31) at least in sections on its inner circumferential surface.

5. Dual-mass flywheel (1) according to either of Claims 3 and 4, **characterized in that** multiple bow springs (50) are provided in the force flow between the primary flywheel disk (10) and the toothed ring (30).

6. Dual-mass flywheel (1) according to Claim 4 or 5, **characterized in that** the force arm (42) is formed, on its end, with a spur toothing (44), wherein the spur toothing (44) engages into the toothing (31) on the inner circumferential surface of the toothed ring (30).

7. Dual-mass flywheel (1) according to one of the preceding claims, **characterized in that** the rocker lever (40) is arranged pivotably on the primary flywheel disk (10), wherein a pivot bearing arrangement (47) extends through a central region of the rocker lever.

8. Dual-mass flywheel (1) according to one of the preceding claims, **characterized in that** the rocker lever (40) is, at the end of its load arm (41), supported on the cam disc (70) by way of at least one roller (45).

9. Dual-mass flywheel (1) according to one of the preceding claims, **characterized in that** the cam disc (70) is formed integrally with the secondary flywheel disk (20).

10. Dual-mass flywheel (1) according to one of the preceding claims, **characterized by** three preferably identical rocker levers (40) which are arranged pivotably on the primary flywheel disk at uniform angular intervals.

11. Dual-mass flywheel (1) according to Claim 10, **characterized in that** the cam disc (70) has a substantially triangular contour with rounded corners (72), wherein the straight sections (73) between the rounded corners (72) are formed with a slight concavity.

## Revendications

1. Volant moteur bi-masse (1), en particulier destiné à être utilisé dans la chaîne cinématique d'un véhicule automobile, comprenant un volant d'inertie primaire (10) et un volant d'inertie secondaire (20), lesquels peuvent être tournés l'un par rapport à l'autre à l'encontre de la force d'au moins un ressort arqué (50), une transmission de couple du volant d'inertie primaire (10) au volant d'inertie secondaire (20) s'effectuant par le biais d'au moins un levier basculant (40), lequel est disposé sur le volant d'inertie primaire (10) ou sur le volant d'inertie secondaire (20), le levier basculant (40) s'appuyant par un bras de charge (41) sur un disque à cames (70) qui est disposé sur l'autre volant d'inertie (20, 10) respectif, et comprenant un bras de force (42) en liaison fonctionnelle avec une extrémité de ressort du ressort arqué (50), l'autre extrémité de ressort du ressort arqué (50) s'appuyant contre le volant d'inertie (10, 20) sur lequel le levier basculant (40) est disposé, le levier basculant (40) comprenant en outre un bras centrifuge (43) qui sert d'équilibrage des masses pour le levier basculant et en particulier d'équilibrage des masses pour le bras de charge et/ou de force, de telle sorte que le levier basculant (40) ne soit exposé à aucun couple ou moment de basculement supplémentaire par le biais des forces centrifuges agissant sur celui-ci.

2. Volant moteur bi-masse (1) selon la revendication 1, **caractérisé en ce que** le levier basculant (40) est disposé sur le volant d'inertie primaire (10) et le disque à cames (40) est disposé sur le volant d'inertie secondaire (20).

3. Volant moteur bi-masse (1) selon la revendication 1 ou 2, **caractérisé en ce qu'**un anneau de couronne dentée (30) est disposé de manière rotative sur le volant d'inertie primaire (10).

4. Volant moteur bi-masse (1) selon la revendication 2 ou 3, **caractérisé en ce que** l'anneau de couronne dentée (30) présente sur sa surface périphérique intérieure, au moins par portions, une denture (31).

5. Volant moteur bi-masse (1) selon l'une des revendications 3 ou 4, **caractérisé en ce que** plusieurs ressorts arqués (50) sont disposés dans le flux de force entre le volant d'inertie primaire (10) et l'anneau de couronne dentée (30).

6. Volant moteur bi-masse (1) selon la revendication 4 ou 5, **caractérisé en ce que** le bras de force (42) est réalisé avec une denture droite (44) à son extrémité, la denture droite (44) s'engrenant dans la denture (31) sur la surface périphérique intérieure de l'anneau de couronne dentée (30).

7. Volant moteur bi-masse (1) selon l'une quelconque des revendications précédentes, **caractérisé en ce que** le levier basculant (40) est disposé de manière pivotante sur le volant d'inertie primaire (10), un palier de pivotement (47) s'étendant à travers une région centrale du levier basculant.

8. Volant moteur bi-masse (1) selon l'une quelconque des revendications précédentes, **caractérisé en ce que** le levier basculant (40) s'appuie, à l'extrémité de son bras de charge (41), sur le disque à cames (70) au moyen d'au moins un galet de roulement (45).

9. Volant moteur bi-masse (1) selon l'une quelconque des revendications précédentes, **caractérisé en ce que** le disque à cames (70) est réalisé d'un seul tenant avec le volant d'inertie secondaire (20).

10. Volant moteur bi-masse (1) selon l'une quelconque des revendications précédentes, **caractérisé par** trois leviers basculants (40) de préférence identiques qui sont disposés de manière pivotante sur le volant d'inertie primaire à des distances angulaires identiques.

11. Volant moteur bi-masse (1) selon la revendication 10, **caractérisé en ce que** le disque à cames (70) présente essentiellement un contour triangulaire présentant des angles arrondis (72), les portions droites (73) entre les angles arrondis (72) étant réalisées de manière à présenter une légère concavité.
